# EUROPÄISCHE PATENTANMELDUNG

(11) **EP 4 053 432 A1**
(43) Veröffentlichungstag der Anmeldung: **07.09.2022**
(21) Anmeldenummer: 22159154.8
(22) Anmeldetag: 28.02.2022
(51) Int. Cl.: F16H 57/04

(54) **SCHMIERVORRICHTUNG FÜR SCHMIERSTELLEN EINES STIRNRADGETRIEBES**

(30) Priorität: 03.03.2021 DE 102021202018
(71) Anmelder: ZF Friedrichshafen AG, 88046 Friedrichshafen (DE)
(72) Erfinder: Pfeffer, Andreas, 94234 Viechtach (DE); Reitinger, Franz, 4092 Esternberg (AT)

(57) **Zusammenfassung**

Schmiervorrichtung für Schmierstellen eines Stirnradgetriebes, mit einem Schmieröl enthaltenden Ölsumpf, in dessen Schmieröl ein um eine erste Drehachse 4 drehbares erstes Zahnrad 1 des Stirnradgetriebes teilweise eintaucht, das in ein um eine zweite Drehachse 8 drehbares zweites Zahnrad 2 des Stirnradgetriebes eingreift. Das zweite Zahnrad 2 ist über dem ersten Zahnrad 1 angeordnet. Das Stirnradgetriebe ist in einem Getriebegehäuse 6 angeordnet, dessen zumindest eine Gehäuseseitenwand 12 an Stirnwänden 10, 11 des ersten und des zweiten Zahnrads 1, 2 in Anlage sind. Dem dem Eingriffsbereich 13 des ersten Zahnrads 1 in das zweite Zahnrad 2 axial gegenüberliegenden Bereich der Gehäuseseitenwand 12 ist eine zu dem ersten und zweiten Zahnrad 1, 2 hin offene Quetschölöffnung ausgebildet ist, von der ein oder mehrere Verbindungskanäle 16 zu einer oder mehreren der Schmierstellen führen.

## Beschreibung

Die Erfindung bezieht sich auf eine Schmiervorrichtung für Schmierstellen eines Stirnradgetriebes, mit einem Schmieröl enthaltenden Ölsumpf, in dessen Schmieröl ein um eine erste Drehachse drehbares erstes Zahnrad des Stirnradgetriebes teilweise eintaucht, das in ein um eine zweite Drehachse drehbares zweites Zahnrad des Stirnradgetriebes eingreift, welches über dem ersten Zahnrad angeordnet ist, wobei das Stirnradgetriebe in einem Getriebegehäuse angeordnet ist, dessen zumindest eine Gehäuseseitenwand an Stirnwänden des ersten und des zweiten Zahnrads in Anlage sind.

Bei einer bekannten Spritzschmierung wird über die Verzahnung aus dem Ölsumpf entnommenes Schmieröl zu Öltaschen gefördert. Von dort gelangt das Schmieröl aufgrund von Höhenunterschieden ohne zusätzlichen Druck zu Schmierstellen. Dabei ist es von Nachteil, dass dieses System sehr stark neigungs-, drehrichtungs-, drehzahl- und temperaturabhängig ist. Insbesondere ist die Spritzschmierung von Schmierstellen bei tiefen Temperaturen problematisch, da dann Schmieröle immer zähflüssiger sind als bei Betriebstemperaturen. Um Leistungsverluste bei Betriebstemperaturen ausschließen zu können, wird bei Schmierstellen an Lagern die Lagervorspannung bei Raumtemperatur so gewählt, dass die angestellte Lagerung bei Betriebstemperatur geringes Spiel aufweist. Dies hat zur Folge, dass bei Tieftemperaturen insbesondere bei einer Kombination von Stahlwellen und Getriebegehäusen aus Aluminium es zu erhöhten Lagervorspannungen kommt. Überlagert man die schlechte Schmiersituation aufgrund von zähem, drucklosem Schmieröl mit erhöhten Lagerlasten aufgrund der erhöhten Lagervorspannung, so sind Lagerheißlaufschäden die Folge.

Bei einer bekannten Druckschmierung verfügt das Getriebe über eine zusätzliche Schmierölpumpe. Diese Pumpe versorgt die Schmierstellen mit Schmieröl. Üblicherweise werden vor den Schmierstellen Drosseln angebracht, um trotz unterschiedlicher Entfernungen der Schmierstellen zur Schmierölpumpe eine ausgewogene Schmierölmengenverteilung zu erreichen. Da die Schmierölpumpen meist direkt an einer der Getriebewellen platziert ist und diese Getriebewellen normalerweise einen Höhenunterschied zum Ölsumpf aufweisen, hat die Schmierölpumpe generell bei der Ansaugung einen Höhenunterschied zu überwinden. Bei tiefen Temperaturen ist das Getriebeöl sehr zäh, wodurch die Erstansaugung mehrere Minuten dauern kann. Überlagert sich dieser Effekt mit einer erhöhten Lagervorspannung, so kann es bei der Druckschmierung zu Lagerheißlaufschäden kommen.

Aufgabe der Erfindung ist es daher eine Schmiervorrichtung für Schmierstellen eines Stirnradgetriebes der eingangs genannten Art zu schaffen, die diese Nachteile vermeidet und eine Mangelschmierung der Schmierstellen bei tieferen Temperaturen des Schmieröls als der Betriebstemperatur vermieden wird.

Diese Aufgabe wird erfindungsgemäß dadurch gelöst, dass dem dem Eingriffsbereich des ersten Zahnrads in das zweite Zahnrad axial gegenüberliegenden Bereich der Gehäuseseitenwand eine zu dem ersten und zweiten Zahnrad hin offene Quetschölöffnung ausgebildet ist, von der ein oder mehrere Verbindungskanäle zu einer oder mehreren der Schmierstellen führen.

Das erste Zahnrad und das zweite Zahnrad sind bevorzugt gleich breit, zumindest aber sind sie derart zueinander angeordnet, dass sie an einer Axialseite auf gleicher Höhe abschließen.

Das innerhalb der ersten Umdrehungen der Zahnräder bei Betriebsbeginn noch kalte und damit zähe Schmieröl wird von dem in das Schmieröl des Ölsumpfes eintauchenden ersten Zahnrad aus dem Ölsumpf entnommen und im Stirnradgetriebe verteilt. Kommt das erste Zahnrad zum Eingriff in das zweite Zahnrad, wird das von dem ersten Zahnrad durch Benetzen aufgenommene Schmieröl durch den Zahneingriff des zweiten Zahnrads in das erste Zahnrad in axialer Richtung verdrängt. Vorzugsweise können auch mehrere Zahneingriffe vorgesehen sein bzw. können mehrere Übersetzungsstufen vorangehen. Das zur Quetschölöffnung hin verdrängte Schmieröl wird in die Quetschölöffnung hinein verdrängt und über die Verbindungskanäle zu den Schmierstellen geführt. Durch die Zähigkeit des Schmieröls tritt an dem Spalt zwischen den Zahnrädern und der Gehäuseseitenwand kaum Leckage auf, so dass das Schmieröl die Schmierstellen erreicht. Durch Erwärmen des Schmieröls im Laufe des weiteren Betriebs wird dieses dünnflüssiger, wodurch zwischen den Zahnrädern und der Gehäuseseitenwand Leckage auftritt und keine Förderung mehr über die Quetschölöffnung und die Verbindungskanäle zu den Schmierstellen erfolgt. Nun aber erfolgt durch die jetzt wiedervorhandene Dünnflüssigkeit des erwärmten Schmieröls eine herkömmliche Schmierung wie z.B. eine Spritzschmierung oder eine Druckschmierung wie eingangs beschrieben. Die Quetschölöffnung hat nun keinen Einfluss mehr auf das Schmiersystem und wird auch nicht mehr benötigt.

Bei Tieftemperaturen des Schmieröls erfolgt aber eine Schmierung der Schmierstellen.

Eine besonders gute Förderung in die Quetschölöffnung erfolgt, wenn die Quetschölöffnung in Drehrichtung des ersten Zahnrades vor einer die erste und zweite Drehachse schneidenden Ebene zu dem ersten und zweiten Zahnrad hin mündend in der Gehäuseseitenwand ausgebildet ist.

Weisen das erste und das zweite Zahnrad Schrägverzahnungen mit einer Zahnneigung auf, deren belastete Zahnbreite nach dem Beginn des Zahneingriffs beim Weiterdrehen der Zahnräder langsam zu der Quetschölöffnung hin ansteigt, so wird zumindest weitgehend das gesamte sich auf den Zähnen befindliche Schmieröl in die Quetschölöffnung gefördert.

Die eine oder mehreren Schmierstellen können Lagerstellen für die Drehlagerung des ersten und/oder zweiten Zahnrads sein.

Die Schmierstellen können sich in einem gegenüber der Quetschölöffnung höher liegenden Bereich befinden und trotzdem noch gut mit Schmieröl versorgt werden, da in der Quetschölöffnung ein ausreichend hoher Druck erzeugt wird.

Alternativ können die Schmierstellen auch gegenüber einem der Quetschölöffnung gleich hoch oder tiefer liegenden Bereich befinden.

Ist die Quetschölöffnung als sich in Umfangsrichtung der Zahnräder erstreckende Nut ausgebildet, so kann über einen größeren Teil des Eingriffsbereichs des ersten Zahnrads in das zweite Zahnrad Schmieröl in die Quetschölöffnung gefördert werden.

Aus Gründen von z.B. einer Gewichtersparnis können die Wellen aus einem Material mit einem kleineren Wärmeausdehnungskoeffizient bestehen als dem Material des Getriebegehäuses. Dazu können die Wellen aus einem Stahl und das Getriebegehäuse aus Aluminium bestehen.

Um Performanceverluste bei Betriebstemperaturen ausschließen zu können, wird die Lagervorspannung bei Raumtemperatur so gewählt, dass die angestellte Lagerung bei Betriebstemperatur geringes Spiel aufweist. Dies hat aber zur Folge, dass es bei Tieftemperaturen und Wellen aus einem Material mit einem kleineren Wärmeausdehnungskoeffizient als dem Material des Getriebegehäuses zu erhöhten Lagervorspannungen führt. Dies kann zu Lagerheißlaufschäden führen. Durch die erfindungsgemäße Schmiervorrichtung wird dies aber vermieden.

Für eine Schmierung bei Betriebstemperatur können in zumindest einer der an Stirnwänden des ersten und des zweiten Zahnrads in Anlage befindlichen Gehäuseseitenwände eine oder mehrere Ölfangtaschen ausgebildet sein, in denen von den umlaufenden Zahnrädern abgeschleudertes Schmieröl sammelbar und aus den Ölfangtaschen über Zuführkanäle den Schmierstellen direkt oder indirekt zuführbar ist.

Eine andere Möglichkeit für eine Schmierung bei Betriebstemperatur kann von einer Schmierölpumpe über Zuführkanäle den Schmierstellen direkt oder indirekt Schmieröl zuführbar sein.

Ein Ausführungsbeispiel der Erfindung ist in der Zeichnung dargestellt und wird im Folgenden näher beschrieben. Es zeigen:

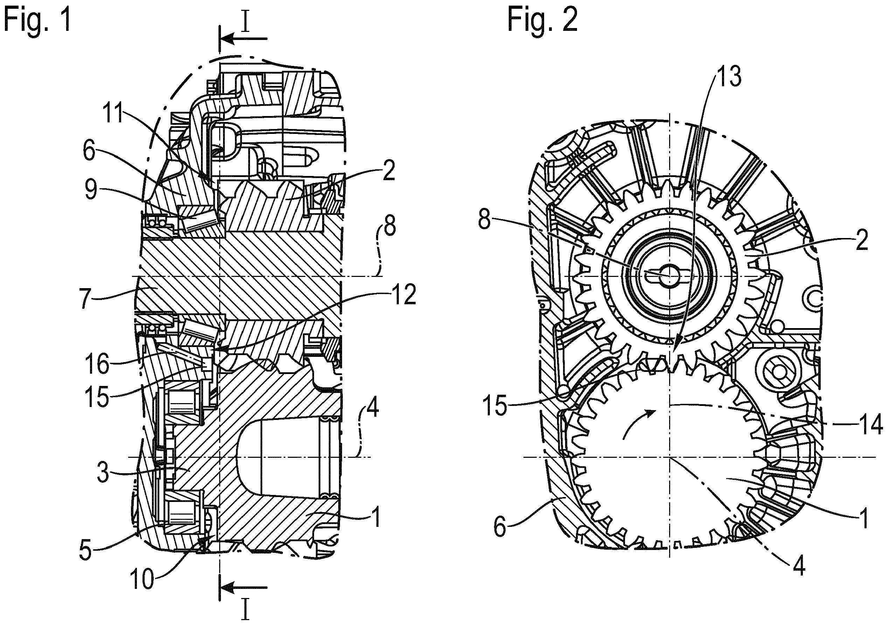

- Figur 1: einen Teillängsschnitt eines Stirnradgetriebes
- Figur 2: einen Schnitt entlang der Linie I-I in Figur 1.

Das in den Figuren dargestellte Stirnradgetriebe ist in einem Getriebegehäuse 6 angeordnet und weist ein erstes Zahnrad 1 auf, in das ein über dem ersten Zahnrad angeordnetes zweites Zahnrad 2 eingreift.

Das erste Zahnrad 1 und das zweite Zahnrad 2 sind schrägverzahnt.

Das erste Zahnrad 1 weist eine koaxiale erste Welle 3 auf, mit der es um eine erste Drehachse 4 in in dem Getriebegehäuse 6 angeordneten ersten Wälzlagern 5 drehbar gelagert ist.

Im unteren Bereich des ersten Zahnrads 1 ist in dem Getriebegehäuse 6 ein mit Schmieröl gefüllter Ölsumpf ausgebildet, so dass der untere Bereich des ersten Zahnrads 1 in das Schmieröl des Ölsumpfs eintaucht.

Das zweite Zahnrad 2 weist ebenfalls eine koaxiale zweite Welle 7 auf, mit der es um eine zur ersten Drehachse 4 parallele zweite Drehachse 8 in in dem Getriebegehäuse 6 angeordneten zweiten Wälzlagern 9 drehbar gelagert ist.

Die Stirnwand des ersten Zahnrades 1 und die zweite Stirnwand 11 des zweiten Zahnrades 2 liegen mit Spiel an einer Gehäuseseitenwand 12 des Innenraums des Getriebegehäuses 6 an.

Das erste Zahnrad 1 und das zweite Zahnrad 2 greifen in einem sich über mehrere Zähne erstreckenden Eingriffsbereich 13 ineinander ein.

Im Eingriffsbereich 13 in Drehrichtung des ersten Zahnrades 1 vor einer die erste und zweite Drehachse 4, 8 schneidenden Ebene 14 zu dem ersten und zweiten Zahnrad 1, 2 hin ist in der Gehäuseseitenwand 12 eine sich in Umfangsrichtung der Zahnräder 1 2 erstreckende Nut 15 ausgebildet, die eine Quetschölöffnung bildet.

Von dieser Nut 15 aus führt ein Verbindungskanal 16 zu dem Bereich des zweiten Wälzlagers 9. Nicht dargestellt kann ein weiterer Verbindungskanal zu dem Bereich des ersten Wälzlagers 5 führen.

Das innerhalb der ersten Umdrehungen der Zahnräder bei Betriebsbeginn noch kalte und damit zähe Schmieröl wird von dem in das Schmieröl des Ölsumpfes eintauchenden ersten Zahnrad 1 aus dem Ölsumpf entnommen und im Getriebegehäuse 6 des Stirnradgetriebes verteilt. Kommt das erste Zahnrad 1 zum Eingriff in das zweite Zahnrad 2, wird das von dem ersten Zahnrad 1 durch Benetzen aufgenommene Schmieröl durch den Zahneingriff des zweiten Zahnrads 2 in das erste Zahnrad in axialer Richtung zur Nut 15 hin verdrängt. Das in die Nut 15 hinein verdrängte Schmieröl wird über den Verbindungskanal16 zu dem zweiten Wälzlager 9 geführt. Durch die Zähigkeit des Schmieröls tritt an dem Spalt zwischen den Zahnrädern 1, 2 und der Gehäuseseitenwand 12 kaum Leckage auf, so dass das Schmieröl das zweite Wälzlager 9 erreicht und schmiert. Durch Erwärmen des Schmieröls im Laufe des weiteren Betriebs wird dieses dünnflüssiger, wodurch zwischen den Zahnrädern 1, 2 und der Gehäuseseitenwand 12 Leckage auftritt und keine Förderung mehr über die Nut 15 und den Verbindungskanal 16 zu dem zweiten Wälzlager 9 erfolgt. Nun aber erfolgt durch die jetzt wieder vorhandene Dünnflüssigkeit des erwärmten Schmieröls eine herkömmliche Schmierung wie z.B. eine Spritzschmierung oder eine Druckschmierung. Die Quetschölöffnung hat nun keinen Einfluss mehr auf das Schmiersystem und wird auch nicht mehr benötigt.

### Bezugszeichen

- 1: erstes Zahnrad
- 2: zweites Zahnrad
- 3: erste Welle
- 4: erste Drehachse
- 5: erstes Wälzlager
- 6: Getriebegehäuse
- 7: zweite Welle
- 8: zweite Drehachse
- 9: zweites Wälzlager
- 10: erste Stirnwand
- 11: zweite Stirnwand
- 12: Gehäuseseitenwand
- 13: Eingriffsbereich
- 14: Ebene
- 15: Nut
- 16: Verbindungskanal

## Patentansprüche

1. Schmiervorrichtung für Schmierstellen eines Stirnradgetriebes, mit einem Schmieröl enthaltenden Ölsumpf, in dessen Schmieröl ein um eine erste Drehachse (4) drehbares erstes Zahnrad (1) des Stirnradgetriebes teilweise eintaucht, das in ein um eine zweite Drehachse (8) drehbares zweites Zahnrad (2) des Stirnradgetriebes eingreift, welches über dem ersten Zahnrad (1) angeordnet ist, wobei das Stirnradgetriebe in einem Getriebegehäuse (6) angeordnet ist, dessen zumindest eine Gehäuseseitenwand (12) an Stirnwänden (10, 11) des ersten und des zweiten Zahnrads (1, 2) in Anlage sind, **dadurch gekennzeichnet, dass** dem dem Eingriffsbereich (13) des ersten Zahnrads (1) in das zweite Zahnrad (2) axial gegenüberliegenden Bereich der Gehäuseseitenwand (12) eine zu dem ersten und zweiten Zahnrad (1, 2) hin offene Quetschölöffnung ausgebildet ist, von der ein oder mehrere Verbindungskanäle (16) zu einer oder mehreren der Schmierstellen führen.

2. Schmiervorrichtung nach Anspruch 1, **dadurch gekennzeichnet, dass** die Quetschölöffnung in Drehrichtung des ersten Zahnrades (1) vor einer die erste und zweite Drehachse (4, 8) schneidenden Ebene (14) zu dem ersten und zweiten Zahnrad (1, 2) hin mündend in der Gehäuseseitenwand (12) ausgebildet ist.

3. Schmiervorrichtung nach einem der vorhergehenden Ansprüche, **dadurch gekennzeichnet, dass** das erste und das zweite Zahnrad (1, 2) Schrägverzahnungen mit einer Zahnneigung aufweisen, deren belastete Zahnbreite nach dem Beginn des Zahneingriffs beim Weiterdrehen der Zahnräder (1, 2) langsam zu der Quetschölöffnung hin ansteigt.

4. Schmiervorrichtung nach einem der vorhergehenden Ansprüche, **dadurch gekennzeichnet, dass** die eine oder mehreren Schmierstellen Lagerstellen für die Drehlagerung des ersten und/oder zweiten Zahnrads (1, 2) sind.

5. Schmiervorrichtung nach einem der vorhergehenden Ansprüche, **dadurch gekennzeichnet, dass** sich die Schmierstellen in einem gegenüber der Quetschölöffnung höher liegenden Bereich befinden.

6. Schmiervorrichtung nach einem der vorhergehenden Ansprüche, **dadurch gekennzeichnet, dass** die Quetschölöffnung als sich in Umfangsrichtung der Zahnräder (, 2) erstreckende Nut (15) ausgebildet ist.

7. Schmiervorrichtung nach einem der vorhergehenden Ansprüche, **dadurch gekennzeichnet, dass** die Wellen (3, 7) aus einem Material mit einem kleineren Wärmeausdehnungskoeffizient bestehen als dem Material des Getriebegehäuses (6).

8. Schmiervorrichtung nach Anspruch 7, **dadurch gekennzeichnet, dass** die Wellen (3, 7) aus einem Stahl und das Getriebegehäuse (6) aus Aluminium bestehen.

9. Schmiervorrichtung nach einem der vorhergehenden Ansprüche, **dadurch gekennzeichnet, dass** in zumindest einer der an Stirnwänden des ersten und des zweiten Zahnrads in Anlage befindlichen Gehäuseseitenwände eine oder mehrere Ölfangtaschen ausgebildet sind, in denen von den umlaufenden Zahnrädern abgeschleudertes Schmieröl sammelbar und aus den Ölfangtaschen über Zuführkanäle den Schmierstellen direkt oder indirekt zuführbar ist.

10. Schmiervorrichtung nach einem der Ansprüche 1 bis 8, **dadurch gekennzeichnet, dass** von einer Schmierölpumpe über Zuführkanäle den Schmierstellen direkt oder indirekt Schmieröl zuführbar ist.
